# EUROPÄISCHE PATENTSCHRIFT

(11) **EP 3 661 452 B1**
(45) Veröffentlichungstag und Bekanntmachung des Hinweises auf die Patenterteilung: **27.11.2024**
(21) Anmeldenummer: 18745622.3
(22) Anmeldetag: 27.07.2018
(51) Int. Cl.: A61C 8/00, A61C 9/00

(54) **ABUTMENT ZUM HALTEN EINES ZAHNERSATZES AN EINEM KIEFERIMPLANTAT**
ABUTMENT FOR HOLDING A DENTAL PROSTHESIS TO A DENTAL IMPLANT
PILIER DESTINÉ À MAINTENIR UNE PROTHÈSE DENTAIRE SUR UN IMPLANT DE MÂCHOIRE

(30) Priorität: 01.08.2017 EP 17184285
(43) Veröffentlichungstag der Anmeldung: 10.06.2020
(73) Patentinhaber: Medentika GmbH, 76549 Hügelsheim (DE)
(72) Erfinder: FIX, Frank, 75196 Remchingen (DE)
(74) Vertreter: Durm Patentanwälte PartG mbB
(86) Internationale Anmeldenummer: PCT/EP2018/070468
(87) Internationale Veröffentlichungsnummer: WO 2019/025321

(56) Entgegenhaltungen:
- EP-A1- 0 473 262
- EP-A1- 2 444 028
- EP-A2- 3 363 406
- EP-B1- 0 473 262
- WO-A1-2010/150188
- WO-A1-2018/007316
- CN-A- 101 297 772
- DE-A1- 102013 013 565
- DE-U1- 202012 102 746
- US-A- 5 863 200
- US-A1- 2009 047 630
- US-A1- 2014 205 969

## Beschreibung

Die vorliegende Erfindung ist durch die Patentansprüche definiert und betrifft ein Abutment zum Halten eines Kieferimplantats, ein Anzeigeelement zum Ankoppeln an das Abutment und ein Zahnmodellsystem.

Abutments werden dazu verwendet, künstliche Einzelzähne sowie Gruppen von Einzelzähnen oder ganze Zahnprothesen (Zahnersatz) im Mund des Patienten zu befestigen. Hierzu werden Kieferimplantate in den Kieferknochen eingebracht (eingeschraubt), an welchen die Abutments (künstliche Zahnstümpfe) befestigt werden. Dies können mehrere Implantate bzw. Abutments für eine ganze Zahnprothese sein. Ein Abutment stellt sozusagen eine Art Zwischenstück zwischen einem Kieferimplantat und einem individuell gefertigten Zahnersatz dar und wird üblicherweise sowohl mit dem Implantat als auch mit dem Zahnersatz durch Anschrauben verbunden.

Für die Herstellung des Zahnersatzes ist es bekannt, die Mundsituation bzw. den Ober- und Unterkiefer (Gebiss) mithilfe von digitalen Scannern dreidimensional zu erfassen. Aus den daraus gewonnenen Datensätzen können mittels 3D-Druckern sogenannte Printmodelle (Zahn- bzw. Gebissmodelle) erstellt werden.

Soll ein implantatgestützter künstlicher Zahnaufbau (Zahnersatz) für einen Patienten individuell gefertigt werden, so wird für den Scanvorgang ein Anzeigeelement (auch als "ScanBody" oder "ScanMarker" bezeichnet) in ein im Kiefer des Patienten verankertes Implantat eingeschraubt. Der ScanBody ist beispielsweise als Pfosten mit einer oder mehreren Flächen ausgebildet und wird beim Scannen des Gebisses erkannt. Er gibt die genaue Position und Ausrichtung des Implantats wieder und dient damit zur späteren exakten Positionierung eines Abutments im (bzw. auf dem) Printmodell. Der Zahnersatz wird dann auf dem Abutment im Printmodell erstellt und später gemeinsam mit dem Abutment in das Implantat im Patientenkiefer geschraubt.

Je nachdem, an welcher Stelle im Gebiss ein Zahnersatz eingebracht werden soll und wie der Kieferknochen einer Person ausgebildet ist bzw. an welchen Stellen im Kiefer sich die Kieferimplantate befinden und/oder welche Winkeldifferenzen zwischen den Kieferimplantaten vorliegen, ist es notwendig abgewinkelte Abutments zu verwenden. Derartige abgewinkelte Abutments weisen einen dem Kiefer zugewandten apikalen Abschnitt auf, der gegenüber einem dem Zahnersatz zugewandten koronalen Abschnitt in einem Winkel steht. Hierdurch kann mit unterschiedlichen Kieferformen, die das Einbringen von Implantaten in verschiedene Richtungen erfordern, umgegangen werden. Bei Kieferformen und Zahnersatzpositionen, bei denen sich nur wenige Stellen zum Einbringen von Implantaten eignen, kann oft durch die Verwendung abgewinkelt ausgebildeter Abutments ein Blockieren beim Einbringen des Zahnersatzes verhindert werden.

Bei der Verwendung abgewinkelter Abutments ist es unbedingt erforderlich, die Rotations- bzw. Achsausrichtung der einzelnen Abutments in ihrem Gesamtverbund aufeinander abzustimmen, um möglichst eine gemeinsame Achsrichtung (Einschubrichtung) beim späteren Aufsetzen der Prothese zu erreichen. Die mittels des ScanBodys beim digitalen Scannen feststellbare Lage und Ausrichtung des koronalen Abschnitts eines an einem Implantat befestigten Abutments lässt jedoch keinen Rückschluss auf die Ausrichtung des apikalen Abschnitts bzw. des Implantats zu. Hierdurch wird die Modellierung des Zahnersatzes erschwert, da beim Scanvorgang normalerweise keine Daten zu dem den Kiefer umgebenden Zahnfleisch erfasst werden können. Bei der Herstellung des Zahnersatzes kann es aus diesem Grund zu Ungenauigkeiten bzw. zu einem erhöhten Aufwand für die Anpassung kommen, da manuelles Eingreifen erforderlich ist. Oft wird bei der Verwendung von abgewinkelten Abutments daher eine manuelle Modellierung gegenüber der Verwendung eines digitalen Scanvorgangs bevorzugt, was zu höherem Aufwand und geringerer Genauigkeit führen kann.

In DE 10 2013 013 565 A1 werden ein Suprastrukturträger und ein Verfahren zu seiner Herstellung offenbart. Auf oder am Suprastrukturträger ist eine künstliche Krone oder ein Verbund aus einem Klebekörper und einer Krone angeordnet. Der Suprastrukturträger weist in dem Klebekörper- und/oder kronentragenden Bereich zumindest bereichsweise eine erste Struktur auf. Zudem ist am Suprastrukturträger in dem dem Implantatkörper zugewandten Bereich eine zweite Struktur angeordnet. Mit dem offenbarten Verfahren ist der Suprastrukturträger als Teil eines prothetischen Zahnersatzes wirtschaftlich zu fertigen.

In DE 20 2012 102 746 U1 wird ein Zahnimplantataufbausystem offenbart. Ein Abutmentaufsatz für ein Kieferimplantat umfasst einen Befestigungsabschnitt zum Befestigen des Abutmentaufsatzes auf dem Kieferimplantat und eine gegenüber dem Befestigungsabschnitt seitlich versetzte Klebebasis zum Aufkleben eines Kronenklebekörpers als Basis für eine Zahnkrone oder zum Aufkleben eines Heilungskappenklebekörpers.

In der WO 2018/007316 A1 wird eine Abutmentbasis für eine restorative Zahnbehandlung offenbart. Die Abutmentbasis umfasst einen um eine erste Achse orientierten Implantatabschnitt, der an einem Zahnimplantat anbringbar ist, und einen um eine zweite Achse orientierten Kronenabschnitt, der an einer Zahnprothese befestigbar ist. Die beiden Achsen des Implantatabschnitts bzw. des Kronenabschnitts sind nicht aufeinander ausgerichtet. Die Anschlagsbasis weist eine zentrale Öffnung auf, die sich über die gesamte Länge derselben erstreckt und dazu geeignet ist, einen Durchgang eines Werkzeuges, wie eines Schraubendrehers, zu ermöglichen.

Einschlägiger Stand der Technik ist auch durch US 2014/205969 A1 gegeben, in dem jedoch nicht offenbart wird, dass ein zweites Indexierungselement als Ausnehmung im Umfang eines koronalen Abschnitts ausgebildet ist und eine Begrenzungsfläche einer ersten Ausnehmung parallel zu einer zweiten Zentralachse verläuft und die Begrenzungsfläche eine Wellenstruktur umfasst und in eine Richtung gewellt ist, die senkrecht und im Abstand zur zweiten Zentralachse verläuft.

EP 3 363 406 A2, veröffentlicht am 18.10.2017, beansprucht die Priorität vom 17.02.2017 und ist Stand der Technik nach Artikel 54(3) EPÜ und offenbart keine Begrenzungsfläche einer Ausnehmung, die in eine Richtung gewellt ist, die senkrecht und im Abstand zu einer zweiten Zentralachse verläuft.

Ausgehend hiervon stellt sich das Problem, den Aufwand bei der Herstellung des Printmodells zu minimieren und die Genauigkeit bei der Herstellung von Zahnersatz zu verbessern. Bei der Verwendung abgewinkelter Abutments soll ein digitaler Scanvorgang sowie ein (automatisierter) 3D-Druck eines Printmodells ermöglicht werden.

Gelöst wird diese Aufgabe durch ein Abutment gemäß Anspruch 1.

Weiterhin gelöst wird die Aufgabe durch ein Anzeigeelement gemäß Anspruch 8.

In einem weiteren Aspekt betrifft die Erfindung ein Zahnmodellsystem gemäß Anspruch 13.

Offenbart und nicht beansprucht ist ein Verfahren zum Herstellen eines Zahnersatzes.

Bevorzugte Ausgestaltungen der Erfindung werden in den abhängigen Ansprüchen beschrieben. Es versteht sich, dass das Abutment, das Anzeigeelement, das Zahnmodellsystem sowie das Verfahren entsprechend der für das Abutment in den abhängigen Ansprüchen beschriebenen Ausgestaltungen ausgeführt sein können.

Erfindungsgemäß ist bei einem abgewinkelten Abutment ein Indexierungselement vorgesehen. Das Indexierungselement befindet sich in der Mantelfläche des koronalen Abschnitts. Unter einer Mantelfläche versteht sich die Außenfläche bzw. der Umfang des Körpers. Das Indexierungselement liegt in dieser Fläche. Insbesondere kann das Indexierungselement als Vorsprung oder als Ausnehmung ausgebildet sein, sodass die Mantelfläche unregelmäßig verläuft. Sozusagen kann die Mantelfläche also einen ersten Teil, der der Mantel- bzw. Außenfläche eines ursprünglichen Körpers entspricht, und einen zweiten Teil, der einer Fläche entspricht, die durch ein Wegnehmen (Ausnehmung) oder Hinzufügen (Vorsprung) von Material vom/zum ursprünglichen Körper entstanden ist, umfassen. Ebenfalls ist es möglich, dass das Indexierungselement als geometrische Form in einem Querschnitt des koronalen Abschnitts ausgebildet ist, beispielsweise als Hexagon, Oktagon oder Quadrat.

Das Indexierungselement wirkt mit einem Anzeigeelement (ScanBody) zusammen und gibt diesem Anzeigeelement die Ausrichtung des apikalen Abschnitts, also die Ausrichtung des Kieferimplantats, vor. Unter einer Ausrichtung der ersten Zentralachse versteht sich hierin insbesondere eine Winkelangabe in Bezug auf die Position und Orientierung der zweiten Zentralachse, die der Orientierung des Anzeigeelements entspricht. Die Ausrichtung umfasst bevorzugt die Angabe eines Winkels einer Projektion der ersten Zentralachse in eine Ebene, die senkrecht zur zweiten Zentralachse verläuft. Abgesehen von der Angabe eines Winkels, kann die Ausrichtung auch in anderer Weise bestimmt werden. Die Ausrichtung der ersten Zentralachse ist mittels eines solchen Winkels und ausgehend von einem bekannten Winkel zwischen den beiden Zentralachsen eindeutig festgelegt. Das Indexierungselement in der Mantelfläche des koronalen Abschnitts ist gegenüber dem apikalen Abschnitt indexiert.

Bei herkömmlichen Abutments bzw. Anzeigeelementen, bei denen der koronale Abschnitt zumeist konusförmig ausgebildet ist, ist eine Rotation des Anzeigeelements um die zweite Zentralachse möglich. Daher kann ausgehend von der Erfassung des Anzeigeelements nur die Position des Abutments sowie die Ausrichtung der zweiten Zentralachse, nicht aber die Ausrichtung der ersten Zentralachse, festgestellt werden.

Im Gegensatz dazu kann erfindungsgemäß zusätzlich zur (dreidimensionalen) Position im Mund und zur Ausrichtung der zweiten Zentralachse auch die Ausrichtung der ersten Zentralachse bzw. des Kieferimplantats festgestellt werden. Ein an das Abutment angekoppeltes Anzeigeelement wird mittels des Indexierungselements ausgerichtet. Durch das Indexierungselement wird eine eindeutige Ausrichtung des Anzeigeelements am Abutment vorgegeben, sodass ausgehend von der Ausrichtung des Anzeigeelements auch die Ausrichtung der ersten Zentralachse berechnet werden kann.

Hierzu kann das erfindungsgemäße Indexierungselement mit einer entsprechenden, korrespondierend ausgebildeten Indexierungskopplung am Anzeigeelement zusammenwirken. Indexierungselement und Indexierungskopplung geben durch Formschluss die Ausrichtung des Anzeigeelements basierend auf der Ausrichtung des apikalen Abschnitts bzw. der ersten Zentralachse vor. Ausgehend von der im Scanvorgang feststellbaren Ausrichtung des Anzeigeelements, kann die Ausrichtung der ersten Zentralachse berechnet werden.

Dies bewirkt, dass ausgehend vom Datensatz des Scanvorgangs auf die Kieferform bzw. den Verlauf und die Ausrichtung der Implantate zurückgeschlossen werden kann. Die entsprechende Anpassung eines Zahnersatzes kann vorgenommen werden. Insbesondere können entsprechende fleischfarbene Blenden in den Bereichen des Zahnersatzes vorgesehen werden, die direkt mit dem Zahnfleisch in Kontakt stehen. Es wird ermöglicht, dass das gesamte Printmodell in einem 3D-Druckvorgang erzeugt wird, ausgehend von den im digitalen Scanvorgang erfassten Daten. Zudem können Abutments jederzeit aus dem Modell oder der Mundsituation entfernt werden und präzise in genau gleicher Ausrichtung replaziert werden.

Die Erfindung erlaubt es, digital zu arbeiten. Ein digitaler Scanvorgang kann verwendet werden, um ein Printmodell automatisch zu erzeugen. Hierdurch wird der Aufwand bei der Herstellung des Printmodells bzw. des Zahnersatzes minimiert. Es kann Zahnersatz hoher Qualität hergestellt werden, da eine genaue Anpassung der Blenden an den Kiefer bzw. das Zahnfleisch eines Menschen ermöglicht wird.

Erfindungsgemäß ist das Indexierungselement als erste Ausnehmung im Umfang des koronalen Abschnitts ausgebildet. Unter einer Ausnehmung versteht sich insbesondere eine Einbuchtung bzw. eine Delle in der Mantelfläche. Die Positionierung im Umfang bedeutet, dass ein Teilstück eines an sich rotationssymmetrischen Körpers abgenommen bzw. ausgenommen ist. Es fehlt also ein Teil der ursprünglichen Mantelfläche bzw. des Materials im koronalen Bereich. Vorteilhaft ist hierbei insbesondere, dass eine Kompatibilität zu Standard-Ankopplungsstellen an einem Zahnersatz erhalten bleibt, da gegenüber der ursprünglichen Form lediglich Material abgenommen, nicht jedoch hinzugefügt wird.

Das Abutment umfasst ein zweites Indexierungselement, das als zweite Ausnehmung im Umfang des koronalen Abschnitts ausgebildet ist. Durch das Vorhandensein von zwei Indexierungselementen, wird erreicht, dass eine hohe Positionierungssicherheit bei der Ankopplung des Anzeigeelements an dem Abutment sichergestellt ist. Die Größe üblicher Abutments liegt im Bereich einiger Millimeter. Ein koronaler Abschnitt eines herkömmlichen Abutments kann beispielsweise einen Durchmesser von ungefähr 5 mm in einer Ebene senkrecht zur zweiten Zentralachse aufweisen. Um einen Formschluss zwischen Ausnehmung und entsprechendem Vorsprung am Anzeigeelement herzustellen ist es vorteilhaft, zwei Ausnehmungen zu verwenden. Die Stabilität wird erhöht. Die Positionssicherheit bleibt gewährleistet.

In einer vorteilhaften Ausgestaltung weisen die erste Ausnehmung und die zweite Ausnehmung zum eindeutigen Vorgeben der Ausrichtung des ankoppelbaren Anzeigeelements eine unterschiedliche Größe auf, eine unterschiedliche Form auf und/oder sind bezüglich der zweiten Zentralachse in einem von 180° verschiedenen Winkel angeordnet. Um ein Verdrehen und damit eine uneindeutige Ausrichtung des Anzeigeelements zu verhindern, können die beiden Ausnehmungen unterschiedlich groß sein, unterschiedlich geformt sein oder auch in einem von 180° verschiedenen Winkel zueinander angeordnet sein. Alle Optionen erlauben, dass ein Ankoppeln des Anzeigeelements an das Abutment nur dann erfolgen kann, wenn das Anzeigeelement in der vordefinierten Position angelegt wird. Eine eindeutige Ankopplung wird erreicht.

Erfindungsgemäß umfasst der koronale Abschnitt einen sich in Richtung des apikalen Abschnitts verbreiternden kegelstumpfförmigen Bereich, in dem das Indexierungselement angeordnet ist. Als eine Art Branchenstandard im Bereich der Abutments haben sich zwischenzeitlich die so genannten Multi-Unit-Abutments durchgesetzt. Bei einer derartigen Multi-Unit findet sich im koronalen Abschnitt ein Interface zum Ankoppeln an den Zahnersatz. Vorzugsweise ist hierzu ein kegelstumpfförmiger oder auch konusförmiger Bereich, der sich in Richtung des apikalen Abschnitts verbreitert, vorgesehen.

Durch einen derartigen kegelstumpfförmigen Bereich wird demnach eine Kompatibilität zwischen Abutment und Zahnersatz hergestellt. Durch die kegelstumpfförmige Ausbildung wird beim Anziehen einer Schraubverbindung eine konzentrische Anordnung des koronalen Abschnitts und der Ausbuchtung im Zahnersatz erreicht.

Die Positionierung des Zahnersatzes beim Befestigen durch Anschrauben erfolgt automatisch. Im kegelstumpfförmigen Bereich ist erfindungsgemäß das Indexierungselement angeordnet. Daher kann auch bei der Ankopplung des Anzeigeelements eine konzentrische Anordnung von Anzeigeelement und koronalem Abschnitt sichergestellt werden.

Eine Begrenzungsfläche der ersten und/oder zweiten Ausnehmung verläuft parallel zur zweiten Zentralachse. Unter einer Begrenzungsfläche ist ein Teil der Mantelfläche des Abutments im koronalen Abschnitt zu verstehen. Die Begrenzungsfläche grenzt die Ausnehmung vom koronalen Bereich des Abutments ab, bildet also die äußere Form der Ausnehmung. Ausgehend von einem ursprünglich rotationssymmetrischen koronalen Bereich, aus dem zur Herstellung des Indexierungselements ein Teil ausgenommen wird, ergibt sich die Begrenzungsfläche als diejenige Fläche bzw. derjenige Teil der Mantelfläche, der durch die Ausnehmung neu entsteht. Diese Begrenzungsfläche verläuft parallel zur zweiten Zentralachse. Beim Ankoppeln des Anzeigeelements an das Abutment kann das Anzeigeelement also aufgesteckt werden. Durch die Verwendung einer derartig ausgebildeten Begrenzungsfläche wird erreicht, dass die Ausnehmung die Stabilität des Abutments möglichst wenig beeinflusst. Es wird möglichst wenig Material im koronalen Abschnitt entfernt. Die Stabilität des Abutments insbesondere in seinem koronalen Abschnitt bleibt weitestgehend erhalten. Zudem wird eine gute Herstellbarkeit gewährleistet.

Die Begrenzungsfläche umfasst eine Wellenstruktur, die vorzugsweise symmetrisch bezüglich einer Symmetrieebene der ersten und/oder zweiten Ausnehmung ist. Unter einer Wellenstruktur versteht man eine regelmäßig geschwungene Struktur mit mehreren Bergen und Tälern. Hierbei bleibt die parallele Ausrichtung der Begrenzungsfläche zur zweiten Zentralachse erhalten. Die Begrenzungsfläche ist in eine Richtung gewellt, die senkrecht und im Abstand zur zweiten Zentralachse verläuft. Durch die Verwendung einer Wellenstruktur kann ein guter Formschluss zwischen Ausnehmung und entsprechendem Vorsprung am Anzeigeelement sichergestellt werden, insoweit als die Anlagefläche vergrößert wird und die Eindeutigkeit der Kopplung sichergestellt. Die Symmetrieebene der Ausnehmung verläuft parallel zur zweite Zentralachse.

In einer weiteren vorteilhaften Ausgestaltung umfasst das Abutment eine senkrecht zur zweiten Zentralachse ausgerichtete und um die zweite Zentralachse umlaufenden Anschlagsfläche zum Anlegen des Zahnersatzes. Eine derartige Anschlagsfläche dient dazu, dass der Zahnersatz sowie auch das Anzeigeelement beim digitalen Scanvorgang fest und in eindeutiger Orientierung mit dem Abutment verbindbar sind. Eine entsprechend ausgebildete Anschlagsfläche des Zahnersatzes oder am Anzeigeelement liegt an der Anschlagsfläche des Abutments an. Eine stabile Verankerung des Zahnersatzes und auch des Anzeigeelements wird sichergestellt.

Weiter vorteilhaft umfasst das Abutment einen parallel zur Anschlagsfläche verlaufenden Absatz zwischen dem Indexierungselement und der Anschlagsfläche. Der Absatz zwischen Indexierungselement und Anschlagsfläche ist insbesondere vorteilhaft, wenn als Indexierungselement eine Ausnehmung vorgesehen ist, die zumeist in einem Fräsvorgang hergestellt wird. Ein solcher Fräsvorgang bedingt eine Toleranz beim Abfräsen. Um sicherzustellen, dass die Anschlagsfläche nicht beschädigt wird, bleibt zwischen Anschlagsfläche und Ausnehmung ein Absatz erhalten, der sozusagen einen Sicherheitspuffer für Toleranzen beim Fräsvorgang der Ausnehmung darstellt. Es wird sichergestellt, dass die Anschlagsfläche nicht beschädigt oder zerkratzt wird. Die Herstellungs- bzw. Ausschusskosten werden minimiert.

In einer weiteren Ausgestaltung umfasst das Abutment eine entlang der ersten Zentralachse durch den koronalen Abschnitt und den apikalen Abschnitt verlaufende ersten Bohrung zum Aufnehmen eines Befestigungselements zum Befestigen des Abutments am Kieferimplantat, wobei die erste Bohrung eine Mantelfläche des koronalen Abschnitts durchdringt; und ist bevorzugt ein Durchmesser der ersten Bohrung im apikalen Abschnitt kleiner als ein Durchmesser der ersten Bohrung im koronalen Abschnitt. Durch die erste Bohrung kann ein Befestigungselement, insbesondere eine Schraube, für die Befestigung des Abutments am Kieferimplantat durch das Abutment eingebracht werden. Da das Abutment abgewinkelt ist, durchdringt die Bohrung die Mantelfläche im koronalen Abschnitt. Sowohl beim Einlegen der Schraube als auch beim Festschrauben erfolgt der Zugang durch diese, die Mantelfläche durchdringende, Bohrung. Durch unterschiedliche Durchmesser im apikalen und koronalen Abschnitt, kann ein Sitz des Schraubenkopfes innerhalb des Abutments erreicht werden. Da sich die Bohrung in ihrer Dimension je nach Abutmenttyp unterscheidet, ist die Bohrung nicht als Indexierungselement verwendbar. Die Indexierungskopplung im Anzeigeelement ist immer dieselbe, da das Anzeigeelement standardisiert in der gleichen Form hergestellt werden soll. Zudem kann es aufgrund der geringen Gesamtgröße des Abutments im Millimeterbereich beim Ankoppeln des Anzeigeelements zu Ungenauigkeiten oder auch zu Beschädigungen kommen. Das Indexierungselement muss daher eine gewisse Stabilität aufweisen. Die die Mantelfläche durchdringende Bohrung bedingt Kanten im Umfang des koronalen Abschnitts, die diese Stabilität nicht bieten. Daher kann die Bohrung auch aus Stabilitätsgründen nicht als Indexierungselement verwendet werden.

In einer vorteilhaften Ausgestaltung ist ein durch die erste Bohrung unterbrochenes Segment der Mantelfläche des koronalen Abschnitts kleiner als ein durch die erste Ausnehmung unterbrochenes Segment der Mantelfläche des koronalen Abschnitts. Eine eindeutige Positionierung des Anzeigeelements wird sichergestellt. Es wird verhindert, dass die Indexierungskopplung in der ersten Bohrung aufgenommen wird, woraus sich eine Uneindeutigkeit ergeben könnte.

Vorzugsweise umfasst das Abutment eine entlang der zweiten Zentralachse durch den koronalen Abschnitt verlaufende zweiten Bohrung mit Innengewinde zum Anschrauben des Zahnersatzes. Der Zahnersatz wird normalerweise direkt in die zweite Bohrung eingeschraubt. Durch die Verwendung eines Innengewindes kann eine einfache Montage des Zahnersatzes sichergestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische perspektivische Seitenansicht eines Abutments gemäß einem Aspekt der vorliegenden Erfindung;
- Figur 2: eine schematische Darstellung eines erfindungsgemäßen Zahnmodellsystems;
- Figur 3: eine schematische perspektivische Darstellung eines Anzeigeelements gemäß einem Aspekt der vorliegenden Erfindung;
- Figur 4: ein erfindungsgemäßes Abutment in einer Ansicht senkrecht zur ersten Zentralachse;
- Figur 5a: eine Darstellung einer ersten Ausführungsform eines erfindungsgemäßen Abutments in einer Ansicht senkrecht zur zweiten Zentralachse;
- Figur 5b: eine Darstellung einer zweiten Ausführungsform eines erfindungsgemäßen Abutments in einer Ansicht senkrecht zur zweiten Zentralachse; und
- Figur 6: eine Seitenansicht eines erfindungsgemäßen Abutments.

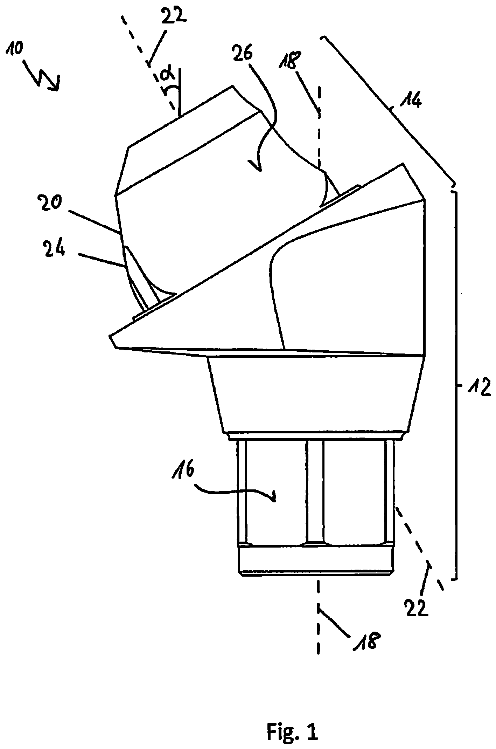

In der Figur 1 ist ein erfindungsgemäßes Abutment 10 zum Halten eines Zahnersatzes in einem Kieferimplantat dargestellt. Das Abutment 10 umfasst einen apikalen Abschnitt 12, also einen Abschnitt, der dem Kiefer zugewandt ist und der an dem Kieferimplantat befestigt wird. Das Abutment 10 umfasst weiterhin einen koronalen Abschnitt 14, also einen Abschnitt, der der Zahnkrone bzw. dem Zahnersatze zugewandt ist und an dem der Zahnersatz befestigt wird. Die beiden Abschnitte 12, 14 des Abutments 10 sind fest miteinander verbunden und bezeichnen Teile eines Körpers.

Der apikale Abschnitt 12 ist im Wesentlichen zylindrisch aufgebaut, wobei im Bereich der Kopplung an das Kieferimplantat in der dargestellten Ausführungsform mehrere ebene Außenflächen 16 vorgesehen sind, die mit einem entsprechend ausgebildeten Kieferimplantat zusammenwirken, um ein Verdrehen des Abutments 10 gegenüber dem Kieferimplantat zu verhindern. Der apikale Abschnitt 12 ist entlang einer ersten Zentralachse 18 aufgebaut. Die erste Zentralachse 18 ist in der gezeigten Darstellung eine Senkrechte.

Der koronale Abschnitt 14 umfasst einen kegelstumpfförmigen Bereich 20, der als Konus in eine entsprechend ausgeformte Ausbuchtung in dem Zahnersatz eingreift und an dem Zahnersatz befestigbar ist. Der koronale Abschnitt 14 ist entlang einer im Winkel zur ersten Zentralachse 18 stehenden zweiten Zentralachse 22 aufgebaut. Der Winkel zwischen den Zentralachsen ist so zu wählen, dass die beiden Zentralachsen 18, 22 nicht parallel zueinander verlaufen. Bevorzugt liegen beide Zentralachsen 18, 22 in einer Ebene, so dass ein Schnittpunkt der Zentralachsen vorliegt.

Es versteht sich, dass sowohl der apikale Abschnitt 12 als auch der koronale Abschnitt 14 normalerweise nicht rotationssymmetrisch zu ihren Zentralachsen aufgebaut sind. Beide Abschnitte sind dennoch im Wesentlichen zylinderförmig ausgebildet.

Die vorliegende Erfindung bezieht sich auf abgewinkelte Abutments, also Abutments, bei denen die erste Zentralachse 18 und die zweite Zentralachse 22 in einem Winkel *α* zueinanderstehen. Übliche Winkel liegen hierbei beispielsweise bei 15°-45°, 20°-40°, 25°-35°, bevorzugt 30°. Es versteht sich, dass auch andere Winkel möglich und vorteilhaft sind. Durch die Winkelstellung der beiden Zentralachsen 18, 22 wird ermöglicht, dass das Abutment 10 auch bei Kieferformen verwendet werden kann, die bezüglich der Positionierung und Ausrichtung des Kieferimplantats wenig Spielraum lassen und bei denen es erforderlich ist, dass mehrere Kieferimplantate in unterschiedliche Richtungen in den Kiefer eingebracht werden. Ebenfalls werden abgewinkelte Abutments verwendet, wenn durch die Größe und Art der benötigten Zahnprothese die Position der Kieferimplantate in engen Grenzen vorgegeben ist.

Die dargestellte Ausführungsform des erfindungsgemäßen Abutments 10 ist als sogenanntes Multi-Unit-Abutment ausgebildet. Diese Multi-Unit hat sich als Quasi-Standard, der von verschiedenen Herstellern angeboten wird, durchgesetzt und zeichnet sich insbesondere durch den kegelstumpfförmigen Bereich 20 im koronalen Abschnitt 14 aus. Die entsprechend an dem Zahnersatz vorgesehenen Anschlussstellen sind zumeist als Ausnehmungen ausgebildet, die den koronalen Abschnitt des Abutments aufnehmen und in denen der koronale Abschnitt verankert wird.

Das erfindungsgemäße Abutment 10 umfasst ein Indexierungselement 24, das in einer Mantelfläche 26 des koronalen Abschnitts 14 angeordnet ist. Im dargestellten Ausführungsbeispiel ist das Indexierungselement 24 als erste Ausnehmung im Umfang des koronalen Abschnitts 14 ausgebildet. Ein Stück des Kegelstumpfs ist parallel zur zweiten Zentralachse 22 abgefräst. Dadurch, dass das Indexierungselement 24 als derartige Ausnehmung ausgebildet ist, kann der koronale Abschnitt 14 weiterhin in dieselbe Öffnung in einem Zahnersatz eingepasst werden. Lediglich entsteht an der Stelle der ersten Ausnehmung ein Hohlraum innerhalb der Öffnung in dem Zahnersatz. Eine Anpassung des Zahnersatzes bzw. des weiteren Fertigungsprozesses ist jedoch nicht erforderlich. Eine Kompatibilität bleibt gewährleistet.

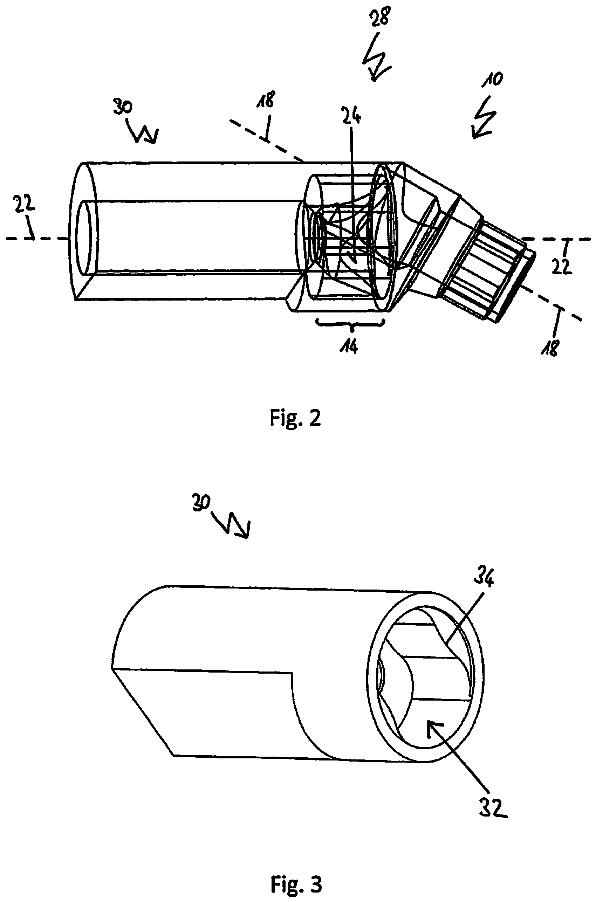

In der Figur 2 ist ein erfindungsgemäßes Zahnmodellsystem 28 dargestellt. Das Zahnmodellsystem 28 umfasst neben dem Abutment 10 noch ein Anzeigeelement 30, das in einem digitalen Scanvorgang für die Herstellung eines Printmodells an den koronalen Abschnitt 14 angekoppelt werden kann. Um den Zahnersatz anfertigen zu können, ist es zumeist erforderlich, dass eine Modellierung der Situation im Kiefer des Patienten erzeugt wird. Hierzu kann einerseits ein Abdruck genommen werden und darauf basierend manuell ein Modell hergestellt werden. Andererseits ist es heutzutage möglich und üblich, einen digitalen Scanvorgang durchzuführen, bei dem eine automatische, scannende Erfassung der Situation durchgeführt wird. Es wird ein Computermodell erzeugt, auf dessen Basis dann ein 3D-Druck generiert werden kann.

Für diesen digitalen Scanvorgang wird ein Anzeigeelement 30 (ScanBody) an das Abutment 10 angekoppelt. Das Anzeigeelement 30 wird gescannt, mittels eines entsprechenden Computerprogramms erkannt und kann dann als Grundlage für die Bestimmung der Position des Abutments sowie der Ausrichtung der zweiten Zentralachse dienen.

In bisherigen Zahnmodellsystemen war es dabei nicht möglich, ausgehend von einem Scan des Anzeigeelements 30, die Position bzw. die Ausrichtung der ersten Zentralachse 18 in Bezug auf die zweite Zentralachse 22 zu bestimmen. Die zweite Zentralachse 22 entspricht einer Zentralachse des Anzeigeelements 30. Durch die konusförmige Ausbildung der Kopplung, konnte aber das Anzeigeelement im angekoppelten Zustand um die zweite Zentralachse rotiert werden. Es war nicht möglich, ausgehend von der beim Scannen erfassbaren Ausrichtung und Position des koronalen Bereichs bzw. der zweiten Zentralachse auf die Ausrichtung der ersten Zentralachse und damit auf die Stellung des Abutments bzw. auf die Position des Kieferimplantats zurückzuschließen. Diese Rotation wird durch das Indexierungselement 24 verhindert.

Durch Verwendung des Indexierungselements 24 sind die Lage und Ausrichtung des Anzeigeelements 30 relativ zum Abutment 10 bzw. dessen zweiter Zentralachse 18, eineindeutig. Deshalb kann anhand der Position und Ausrichtung der ersten Zentralachse 18, die der Position und Achse des Anzeigeelements 30 entspricht, auf die Ausrichtung der ersten Zentralachse 18 rückgeschlossen werden. Die Ausrichtung kann dabei in Form eines Winkels in einer Ebene senkrecht zur zweiten Zentralachse 22 bestimmt werden. Die Ausrichtung kann in kartesischen oder in Polarkoordinaten und entsprechenden Bezugssystemen angegeben werden. Die Verarbeitung erfolgt bevorzugt automatisiert. Folglich kann das erfindungsgemäße Abutment 10 mit Standard-Prothesen, die über Einbuchtungen bzw. ein Sackloch zur Anbindung an Multi-Unit-Abutments verfügen, verwendet werden.

In der Figur 3 ist ein entsprechendes Anzeigeelement 30 in perspektivischer Ansicht dargestellt. Insbesondere umfasst das Anzeigeelement 30 einen Kopplungsbereich 32 in Form einer Öffnung, in die der koronale Abschnitt des Abutments 10 aufgenommen werden kann. Innerhalb dieses Kopplungsbereichs 32 ist eine Indexierungskopplung 34 angeordnet, die mit dem Indexierungselement 24 am Abutment korrespondiert. Insoweit entspricht die Indexierungskopplung 34 bevorzugt einem Vorsprung in einem Kopplungsbereich 32 eines Anzeigeelements 30.

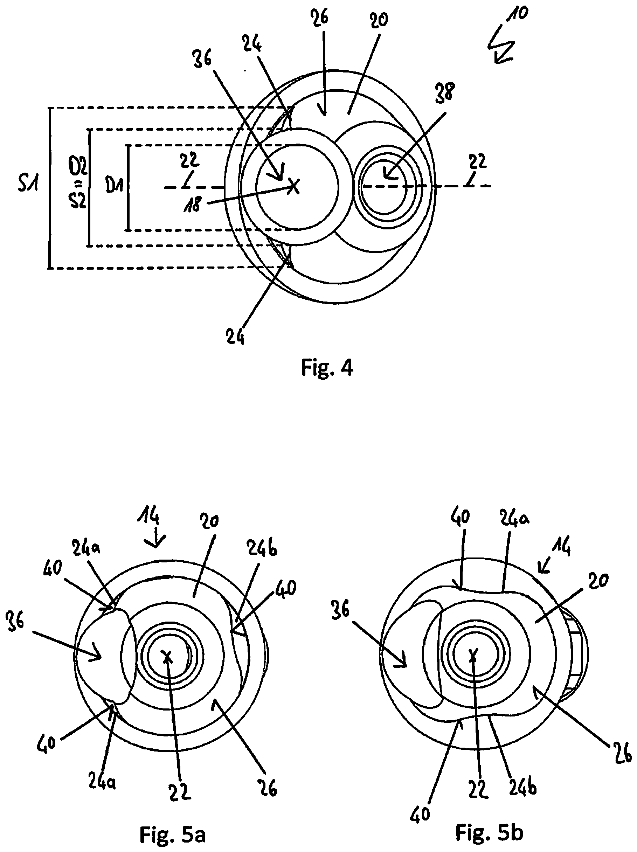

In der Figur 4 ist eine Ansicht des erfindungsgemäßen Abutments 10 in Richtung der ersten Zentralachse 18 dargestellt. Sowohl der apikale Abschnitt 12 als auch der koronale Abschnitt 14 werden von einer ersten Bohrung 36 durchquert, die entlang der ersten Zentralachse 18 verläuft und konzentrisch zu dieser angeordnet ist. Die erste Bohrung 36 dient zur Aufnahme eines Befestigungselements, durch das das Abutment 10 am Kieferimplantat befestigt werden kann. Unter einem lösbaren Befestigen wird dabei insbesondere ein Anschrauben verstanden. Allerdings sind auch andere Arten der Befestigung oder der Ankopplung denkbar.

Bevorzugt wird zum Befestigen eine Schraube verwendet. Der Kopf der Schraube wird vorzugsweise dadurch innerhalb des Abutments 10 aufgenommen, dass ein Durchmesser D1 der ersten Bohrung im apikalen Abschnitt des Abutments kleiner ist als ein Durchmesser D2 der ersten Bohrung im koronalen Abschnitt. Der Schraubenkopf liegt dann auf dem dadurch entstandenen Absatz auf und befindet sich innerhalb des Abutments 10.

Für die Befestigung des Abutments 10 am Zahnersatz ist eine zweite Bohrung 38 vorgesehen, die entlang der zweiten Zentralachse 22 verläuft. Die zweite Bohrung 38 umfasst ein Innengewinde. In das Innengewinde kann eine Schraube eingreifen, die einen Zahnersatz oder auch ein Anzeigeelement am Abutment 10 fixiert. Es versteht sich, dass auch hierbei ein anderes Befestigungsmittel verwendet werden kann.

Wie dargestellt, durchbricht die erste Bohrung 36 die Mantelfläche 26 des koronalen Abschnitts. Im gezeigten Ausführungsbeispiel des Abutments 10 ist ein als Ausnehmung ausgebildetes Indexierungselement 24 vorgesehen. Die Ausnehmung befindet sich dabei im kegelstumpfförmigen Bereich 20 im koronalen Abschnitt des Abutments 10. Ein Teilstück des Kegelstumpfs fehlt, sodass eine Begrenzungsfläche entsteht.

Das Indexierungselement 24 bzw. die Ausnehmung ist dabei so dimensioniert, dass ein unterbrochenes Segment S1 der Mantelfläche 26 durch die Ausnehmung größer ist als ein durch die erste Bohrung 36 unterbrochenes Segment S2 der Mantelfläche 26, das im dargestellten Beispiel in seiner maximalen Ausdehnung senkrecht zur ersten Zentralachse 18 dem Durchmesser D2 der ersten Bohrung 36 im koronalen Abschnitt 14 entspricht. Das Indexierungselement 24 wird sozusagen von der ersten Bohrung 36 in zwei Teile geteilt. Durch dieses Größenverhältnis wird sichergestellt, dass die Indexierungskopplung des Anzeigeelements 30 nicht bereits in die durch die erste Bohrung 36 gebildete Unterbrechung der Mantelfläche 26 des koronalen Abschnitts eingreifen kann. Es ergibt sich eine eindeutige Positionierung des Anzeigeelements 30.

In den Figuren 5a und 5b sind zwei Ausführungsformen eines erfindungsgemäßen Abutments 10 dargestellt, bei denen jeweils zwei Indexierungselemente 24 in der Mantelfläche 26 des koronalen Abschnitts angeordnet sind. Dargestellt ist in den Figuren 5a und 5b jeweils eine Draufsicht auf den koronalen Abschnitt 14 in Richtung der zweiten Zentralachse 22. Zur eindeutigen Beschreibung wird im Folgenden auf ein erstes Indexierungselement 24a und ein zweites Indexierungselement 24b Bezug genommen, wobei es sich versteht, dass diese Bezeichnungen austauschbar sind.

Durch die Verwendung von zwei Indexierungselementen wird erreicht, dass es nicht möglich ist, dass eine einzelne Indexierungskopplung versehentlich in die erste Bohrung 36 eingreift, wodurch es zu einer uneindeutigen Ankopplung des Anzeigeelements 30 kommen könnte.

Sowohl in der Figur 5a als auch in der Figur 5b sind die Indexierungselemente 24a, 24b als Ausnehmungen im Umfang des koronalen Abschnitts 14 bzw. in der Mantelfläche 26 des koronalen Abschnitts 14 ausgebildet. Derartige Ausnehmungen können durch Fräsen hergestellt werden. Die Ausnehmungen weisen eine parallel zur zweiten Zentralachse 22 verlaufende Begrenzungsfläche 40 auf. In beiden dargestellten Ausführungsformen weisen die Begrenzungsflächen 40 jeweils eine Wellenstruktur in einer Ansicht senkrecht zur zweiten Zentralachse 22, wie in den Figuren 5a und 5b dargestellt., auf. Die Wellenstruktur ist bevorzugt symmetrisch bezüglich einer Symmetrieebene, die von der zweiten Zentralachse 22 und einem Mittelpunkt der Ausnehmung aufgespannt wird.

In der Figur 5a befindet sich das erste Indexierungselement 24a im Bereich der ersten Bohrung 36. Das Indexierungselement 24a ist als Ausnehmung im Umfang des koronalen Abschnitts 14 ausgebildet, wobei die Ausnehmung in dem dargestellten Ausführungsbeispiel durch die erste Bohrung 36 unterbrochen ist, sodass das Indexierungselement 24a in zwei Teile aufgeteilt ist. Beidseitig der ersten Bohrung 36 befinden sich jeweils Teile der Ausnehmung. In einem anderen Teil der Mantelfläche 26 befindet sich das zweite Indexierungselement 24b, das ebenfalls als Ausnehmung im Umfang des koronalen Abschnitts 14 ausgebildet ist.

In der dargestellten Ausführungsform weisen die beiden Indexierungselemente 24a, 24b eine unterschiedliche Größe auf. Eine unterschiedliche Größe bedeutet hierbei, dass jeweils unterschiedlich große Teile des kegelstumpfförmigen Bereichs 20 ausgenommen bzw. abgenommen wurden. Einerseits ist es erforderlich, dass ein Indexierungselement eine ausreichend große Auflagefläche zum Anlegen an eine korrespondierende Indexierungskopplung im Anzeigeelement 30 aufweist, um sicherzustellen, dass ein Wackeln bzw. ein Beschädigen vermieden wird. Andererseits ist es erforderlich, dass die Stabilität des Abutments erhalten bleibt, sodass nur so viel Material abgenommen werden darf, dass die Stabilität nicht gefährdet wird.

Weiterhin muss eine verdrehsichere und eindeutige Anbringbarkeit des Anzeigeelements 30 gewährleistet werden. Hierzu ist in der dargestellten Ausführungsform vorgesehen, dass die beiden Indexierungselemente 24a, 24b in Bezug auf die zweite Zentralachse 22 nicht gegenüberliegend, sondern in einem von 180° verschiedenen Winkel angeordnet sind. Zudem weisen die beiden Indexierungselemente 24a, 24b eine voneinander verschiedene Größe auf.

Durch die in einem von 180° verschiedenen Winkel angeordneten unterschiedlich großen Indexierungselemente 24a, 24b wird sichergestellt, dass das Anzeigeelement 30 beim Anbringen an den koronalen Abschnitt 14 nicht verdreht werden kann. Die Anzeigefunktion bleibt eindeutig. Es versteht sich, dass es alternativ oder zusätzlich ebenfalls möglich wäre, unterschiedliche Formen zu verwenden (nicht gezeigt).

In der Figur 5b ist eine alternative Anordnung der beiden Indexierungselemente 24a, 24b dargestellt. Die Indexierungselemente 24a, 24b sind ebenfalls in einem von 180° verschiedenen Winkel im Umfang bzw. in der Mantelfläche des koronalen Abschnitts 14 angeordnet. Beide Indexierungselemente 24a, 24b weisen jedoch dieselbe Größe auf. Durch die Anordnung im von 180° verschiedenen Winkel wird ebenfalls eine verdrehsichere Kopplung an das Anzeigeelement 30 sichergestellt.

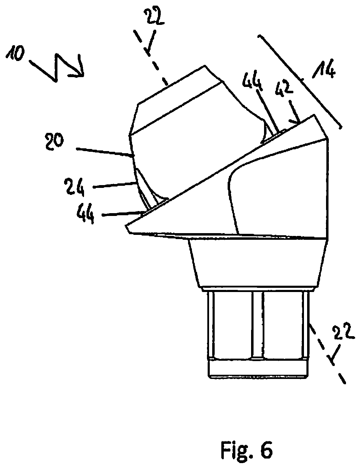

In der Figur 6 ist eine Seitenansicht des Abutments 10 dargestellt. Zur Anbindung des Abutments 10 an den Zahnersatz ist eine die zweite Zentralachse 22 umlaufende Anschlagsfläche 42 vorgesehen. Die zweite Zentralachse 22 steht senkrecht auf der Anschlagsfläche 42.

Bei der Herstellung des Indexierungselements 24 wird ein Teil des kegelstumpfförmigen Bereichs 20 des koronalen Abschnitts 14 abgefräst. Um sicherzustellen, dass bei diesem Fräsvorgang die Anschlagsfläche 42 nicht beschädigt wird, ist zwischen Indexierungselements 24 und Anschlagsfläche 42 ein parallel zur Anschlagsfläche 42 verlaufender Absatz 44 vorgesehen. Dieser Absatz 44 hat eine Höhe von einigen Mikrometern über der Anschlagsfläche 42. Der Absatz 44 stellt insoweit einen Rest des kegelstumpfförmigen Bereichs 20 im Bereich des Indexierungselements 24 dar.

Folglich kann der Zahnersatz ohne Beeinträchtigung durch den Absatz 44 an die Anschlagsfläche 42 angelegt werden. Bei der Konstruktion des Anzeigeelements und der entsprechenden Indexierungskopplung muss der Absatz 44 berücksichtigt und entsprechend ausgefräst werden. Es wird sichergestellt, dass die Anschlagsfläche 42 beim Herstellen des Indexierungselements 24 nicht beschädigt oder verkratzt wird.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Abutment (10) zum Halten eines Zahnersatzes an einem Kieferimplantat, mit:
einem apikalen Abschnitt (12) zum lösbaren Befestigen des Abutments (10) an dem Kieferimplantat, der entlang einer ersten Zentralachse (18) aufgebaut ist;
einem koronalen Abschnitt (14) zum lösbaren Befestigen des Zahnersatzes an dem Abutment (10), der entlang einer zweiten Zentralachse (22) aufgebaut ist, wobei die zweite Zentralachse (22) abgewinkelt zur ersten Zentralachse (18) verläuft;
einer Bohrung (38) in dem koronalen Abschnitt (14), die entlang der zweiten Zentralachse (22) verläuft und ein Innengewinde aufweist, das dazu ausgebildet ist, dass eine Schraube zum lösbaren Fixieren eines Anzeigeelements (30) mit einer axialen Bohrung an dem Abutment (10) oder eine Schraube zum lösbaren Fixieren eines Zahnersatzes an dem Abutment (10) eingreifen kann;
einem ersten Indexierungselement (24a) in einer Mantelfläche (26) des koronalen Abschnitts (14) zum Vorgeben einer eindeutigen Ausrichtung des an den koronalen Abschnitt (14) für einen digitalen Scanvorgang ankoppelbaren Anzeigeelements (30) basierend auf einer eindeutigen Ausrichtung der ersten Zentralachse (18), wobei das erste Indexierungselement (24a) Ausnehmung ausgebildet ist, so dass die Mantelfläche (26) unregelmäßig verläuft, und das erste Indexierungselement (24a) mit dem Anzeigeelement (30) derart zusammenwirkt, dass dem Anzeigeelement (30) die Ausrichtung des apikalen Abschnitts (12) durch Formschluss des ersten Indexierungselements (24a) und einer Indexierungskopplung (34) des Anzeigeelements (30) vorgegeben wird;
einem zweiten Indexierungselement (24b), das als zweite Ausnehmung im Umfang des koronalen Abschnitts (14) ausgebildet ist; und
wobei der koronale Abschnitt (14) einen sich in Richtung des apikalen Abschnitts (12) verbreiternden kegelstumpfförmigen Bereich (20) umfasst, in dem die Indexierungselemente ( 24a, 24b) angeordnet sind;
der koronale Abschnitt (14) geeignet und vorgesehen ist, dass sowohl ein Zahnersatz an dem koronalen Abschnitt (14) befestigbar ist als auch das Anzeigeelement (30) für einen digitalen Scanvorgang ankoppelbar ist;
das erste Indexierungselement (24a) als erste Ausnehmung im Umfang des koronalen Abschnitts (14) ausgebildet ist;
eine Begrenzungsfläche (40) der ersten oder der ersten und zweiten Ausnehmung parallel zur zweiten Zentralachse (22) verläuft; und
die Begrenzungsfläche (40) eine Wellenstruktur umfasst, die bevorzugt symmetrisch bezüglich einer Symmetrieebene der ersten oder der ersten und zweiten Ausnehmung ist, wobei die Begrenzungsfläche in eine Richtung gewellt ist, die senkrecht und im Abstand zur zweiten Zentralachse verläuft.

2. Abutment (10) nach Anspruch 1, wobei die erste Ausnehmung und die zweite Ausnehmung zum eindeutigen Vorgeben der Ausrichtung des ankoppelbaren Anzeigeelements (30) eine unterschiedliche Größe aufweisen, eine unterschiedliche Form aufweisen und/oder bezüglich der zweiten Zentralachse (22) in einem von 180° verschiedenen Winkel angeordnet sind.

3. Abutment (10) nach einem der vorstehenden Ansprüche, mit einer senkrecht zur zweiten Zentralachse (22) ausgerichteten und um die zweite Zentralachse umlaufenden Anschlagsfläche (42) zum Anlegen des Zahnersatzes.

4. Abutment (10) nach Anspruch 3, mit einem parallel zur Anschlagsfläche (42) verlaufenden Absatz (44) zwischen dem Indexierungselement (24, 24a, 24b) und der Anschlagsfläche.

5. Abutment (10) nach einem der vorstehenden Ansprüche, mit einer entlang der ersten Zentralachse (18) durch den koronalen Abschnitt (14) und den apikalen Abschnitt (12) verlaufende ersten Bohrung (36) zum Aufnehmen eines Befestigungselements zum Befestigen des Abutments am Kieferimplantat, wobei
die erste Bohrung die Mantelfläche (26) des koronalen Abschnitts durchdringt; und
bevorzugt ein Durchmesser (D1) der ersten Bohrung im apikalen Abschnitt (12) kleiner ist als ein Durchmesser (D2) der ersten Bohrung im koronalen Abschnitt.

6. Abutment (10) nach einem der Ansprüche 1 und 5, wobei ein durch die erste Bohrung (36) unterbrochenes Segment der Mantelfläche (26) des koronalen Abschnitts (14) kleiner ist als ein durch die erste Ausnehmung unterbrochenes Segment der Mantelfläche des koronalen Abschnitts.

7. Abutment (10) nach einem der vorstehenden Ansprüche, **dadurch gekennzeichnet, dass** die entlang der zweiten Zentralachse (22) durch den koronalen Abschnitt (14) verlaufende zweite Bohrung (38) mit Innengewinde zum Anschrauben des Zahnersatzes verwendbar ist.

8. Anzeigeelement (30) zum Ankoppeln an einen koronalen Abschnitt (14) eines Abutments (10) nach einem der vorstehenden Ansprüche, mit:
einer zum ersten Indexierungselement (24a) des Abutments (10) korrespondierenden Indexierungskopplung (34) zum Festlegen der eindeutigen Ausrichtung des Anzeigeelements (30), wobei die Indexierungskopplung (34) mit dem ersten korrespondierenden Indexierungselement (24a) derart zusammenwirkbar ist, dass dem Anzeigeelement (30) durch Formschluss des ersten Indexierungselements (24a) und der Indexierungskopplung (34) bei Kopplung mit dem koronalen Abschnitt (14) des Abutments (10) die Ausrichtung des apikalen Abschnitts (12) des Abutments (10) eindeutig vorgegeben wird;
die Indexierungskopplung als mit der Ausnehmung im Umfang des koronalen Abschnitts des Abutments (10), deren Begrenzungsfläche (40) die Wellenstruktur umfasst, korrespondierender Vorsprung ausgebildet ist,
wobei das Anzeigeelement (30) eingerichtet und vorgesehen ist zum Anzeigen einer eindeutigen Position und eindeutigen Ausrichtung des abgewinkelten Abutments für einen digitalen Scanvorgang und
das Anzeigeelement (30) dazu eingerichtet und vorgesehen ist, mittels einer Schraube an dem Abutment (10) fixiert zu werden.

9. Anzeigeelement (30) nach Anspruch 8, **dadurch gekennzeichnet, dass** das Anzeigeelement einen Kopplungsbereich (32) aufweist, in dem die Indexierungskopplung angeordnet ist, welche mit dem Indexierungselement des Abutments korrespondiert.

10. Anzeigeelement (30) nach Anspruch 9, **dadurch gekennzeichnet, dass** das Anzeigeelement (30) außerhalb des Kopplungsbereichs 32 an seiner zylindrischen Außenseite eine Abflachung aufweist, die abgeflacht ist und eine ebene Scanfläche bildet, die sich parallel zur Mittelachse des Anzeigeelements (30) erstreckt.

11. Anzeigeelement (30) nach Anspruch 10, **dadurch gekennzeichnet, dass** sich die Abflachung in axialer Richtung an der Außenseite des Anzeigeelements derart erstreckt, dass ihre Ausdehnung über die Hälfte der axialen Längsausdehnung des Anzeigeelements reicht.

12. Anzeigeelement (30) nach einem der Ansprüche 8 bis 11, **dadurch gekennzeichnet, dass** das Anzeigeelement (30) eine axiale Bohrung aufweist, die eine Durchgangsbohrung ist, um das Anzeigeelement mittels einer Schraube an dem Abutment zu fixieren.

13. Zahnmodellsystem (28), mit
einem Abutment (10) zum Halten eines Zahnersatzes an einem Kieferimplantat nach einem der Ansprüche 1-7; und
einem Anzeigeelement (30) zum Ankoppeln an einen koronalen Abschnitt (14) eines Abutments (10) nach Anspruch 8, wobei
das Abutment (10) einen apikalen Abschnitt (12) zum lösbaren Befestigen des Abutments (10) an dem Kieferimplantat, der entlang einer ersten Zentralachse (18) aufgebaut ist, und einen koronalen Abschnitt (14) zum lösbaren Befestigen des Zahnersatzes und des Anzeigeelements (30) an dem Abutment (10), der entlang einer zweiten Zentralachse (22) aufgebaut ist, hat, wobei die zweite Zentralachse (22) abgewinkelt zur ersten Zentralachse (18) verläuft und der koronale Abschnitt (14) einen sich in Richtung des apikalen Abschnitts (12) verbreiternden kegelstumpfförmigen Bereich (20) umfasst,
wobei eine Bohrung (38) in dem koronalen Abschnitt (14), die entlang der zweiten Zentralachse (22) verläuft und ein Innengewinde aufweist, das dazu ausgebildet ist, dass eine Schraube zum lösbaren Fixieren des Anzeigeelements (30) in einer Position an dem Abutment (10) eingreifen kann;
wobei das erste Indexierungselement (24a) in dem kegelstumpfförmigen Bereich (20) in einer Mantelfläche (26) des koronalen Abschnitts (14) zum eindeutigen Vorgeben einer eindeutigen Ausrichtung des an den koronalen Abschnitt (14) für einen digitalen Scanvorgang ankoppelbaren Anzeigeelements (30) basierend auf einer Ausrichtung der ersten Zentralachse (18) angeordnet ist und wobei das erste Indexierungselement (24a) als Vorsprung ausgebildet ist, so dass die Mantelfläche (26) unregelmäßig verläuft, und das erste Indexierungselement (24a) mit dem Anzeigeelement (30) derart zusammenwirkt,
dass dem Anzeigeelement (30) die Ausrichtung des apikalen Abschnitts (12) vorgegeben wird; und
wobei das Anzeigeelement (30) ausgebildet ist, um mittels einer zum Indexierungselement (24, 24a, 24b) korrespondierenden Indexierungskopplung (34) zum Festlegen eine eindeutige Ausrichtung des Anzeigeelements (30) festzulegen und um bei Ankopplung an den koronalen Abschnitt (14) eine eindeutige Position und eindeutige Ausrichtung des Abutments für einen digitalen Scanvorgang anzuzeigen,
wobei die Indexierungskopplung (34) mit dem ersten korrespondierenden Indexierungselement (24, 24a, 24b) derart zusammenwirkt, dass dem Anzeigeelement (30) durch Formschluss des Indexierungselements (24a) und der Indexierungskopplung (34) bei Kopplung mit dem koronalen Abschnitt (14) des Abutments (10) die Ausrichtung des apikalen Abschnitts (12) des Abutments (10) vorgegeben wird,
wobei das Anzeigeelement (30) für einen digitalen Scanvorgang an dem Abutment mittels einer Schraube fixierbar ist, die in das Innengewinde in der Bohrung (38) in dem koronalen Abschnitt (14) des Abutments eingreift.

## Claims

1. Abutment (10) for holding a dental prosthesis to a jaw implant,
having:
an apical section (12) for detachably fastening the abutment (10) to the jaw implant, the apical section being structured along a first central axis (18);
a coronal section (14) for detachably fastening the dental prosthesis to the abutment (10), the coronal section being structured along a second central axis (22), wherein the second central axis (22) extends at an angle to the first central axis (18);
a borehole (38) in the coronal portion (14) extending along the second central axis (22) and having an internal thread adapted to engage a screw for detachably fixing an indicator element (30) having an axial borehole to the abutment (10) or to engage a screw for detachably fixing a dental prosthesis to the abutment (10);
a first indexing element (24a) in a shell surface (26) of the coronal section (14) for specifying an orientation of a display element (30) that is coupleable to the coronal section (14) for a digital scanning operation, based on a unique orientation of the first central axis (18); wherein
the first indexing element (24a) is formed as a recess, so that the shell surface (26) has an irregular course, and
the first indexing element (24a) interacts with the display element (30) in such a way that the orientation of the apical section (12) is predetermined for the display element (30) by positive locking of the first indexing element (24a) and an indexing coupling (34) of the display element (30);
a second indexing element (24b), which is formed as a second recess in the circumference of the coronal portion (14); and wherein the coronal portion (14) surrounds a truncated cone-shaped area (20) which widens in the direction of the apical portion (12) and in which the indexing elements (24a, 24b) are arranged;
the coronal section (14) is suitable and provided so that both a dental prosthesis is attachable to the coronal section (14) and the display element (30) is coupleable for a digital scanning operation;
the first indexing element (24a) is formed as a first recess in the circumference of the coronal section (14);
a delimiting surface (40) of the first recess or the first and second recesses extends parallel to the second central axis (22); and
the delimiting surface (40) comprises an undulated structure which is preferably symmetrical with respect to a plane of symmetry of the first or the first and second recesses, wherein the delimiting surface is undulated in a direction which is perpendicular to and spaced from the second central axis.

2. Abutment (10) according to claim 1, wherein to unambiguously specify the orientation of the coupleable display element (30), the first recess and the second recess have a different size and/or a different shape, and/or are situated at an angle different from 180° with respect to the second central axis (22).

3. Abutment (10) according to one of the preceding claims, having a stop surface (42), which is oriented perpendicularly with respect to the second central axis (22) and circumferentially surrounds the second central axis, for applying the dental prosthesis.

4. Abutment (10) according to claim 3, having a shoulder (44), extending parallel to the stop surface (42), between the indexing element (24, 24a, 24b) and the stop surface.

5. Abutment (10) according to one of the preceding claims, having
a first borehole (36), extending through the coronal section (14) and the apical section (12) along the first central axis (18), for receiving a fastening element for fastening the abutment to the jaw implant, wherein
the first borehole penetrates a shell surface (26) of the coronal section; and
a diameter (D1) of the first borehole in the apical section (12) is preferably smaller than a diameter (D2) of the first borehole in the coronal section.

6. Abutment (10) according to any one of claims 1 and 5, wherein
a segment of the shell surface (26) of the coronal section (14) that is interrupted by the first borehole (36) is smaller than a segment of the shell surface of the coronal section that is interrupted by the first recess.

7. Abutment (10) according to one of the preceding claims, **characterized in that** the second borehole (38) extends through the coronal section (14) along the second central axis (22) and has an internal thread for screwing on the dental prosthesis.

8. Display element (30) for coupling to a coronal section (14) of an abutment (10) according to one of the preceding claims having:
an indexing coupling (34), corresponding to the first indexing element (24a) of the abutment (10), for unambiguously specifying the orientation of the display element (30), wherein
the indexing coupling (34) can be combined with the first corresponding indexing element (24a) in such a way that, when coupling the display element to the coronal section (14) of the abutment (10) by positive locking of the first indexing element (24a) and the indexing coupling (34), the orientation of the apical section (12) of the abutment (10) is unambiguously predetermined for the display element (30);
the indexing coupling is designed as a protrusion corresponding to the recess in the circumference of the coronal section of the abutment (10), the delimiting surface (40) of which comprises the undulated structure,
wherein the display element (30) is designed and configured to display an unambiguous position and unambiguous orientation of the angled abutment for a digital scanning operation, and
the display element (30) is designed and configured to be fixed to the abutment (10) by means of a screw.

9. Display element (30) according to claim 8, **characterized in that** the display element has a coupling area (32) which corresponds to the indexing element of the abutment and in which the indexing coupling is arranged.

10. Display element (30) according to claim 9, **characterized in that** the display element (30) has outside the coupling area (32) a flattening on its cylindrical outer side, which is flattened and forms a flat scanning surface extending parallel to the central axis of the display element (30).

11. Display element (30) according to claim 10, **characterized in that** the flattening extends in axial direction on the outside of the display element in such a way that its extent extends over half of the axial longitudinal extent of the display element.

12. Display element (30) according to one of claims 8 to 11, **characterized in that** the display element (30) has an axial borehole which is a through borehole for fixing the display element to the abutment by means of a screw.

13. Tooth model system (28), comprising
an abutment (10) for holding a dental prosthesis on a jaw implant, according to any one of claims 1-7; and
a display element (30) for coupling to a coronal portion (14) of an abutment (10), according to claim 8, wherein
the abutment (10) comprises an apical portion (12) for releasably attaching the abutment (10) to the jaw implant, which is structured along a first central axis (18), and a coronal portion (14) for releasably attaching the dental prosthesis and the display element (30) to the abutment (10), which is structured along a second central axis (22), wherein the second central axis (22) extends at an angle to the first central axis (18) and the coronal section (14) comprises a truncated cone-shaped area (20) which widens in the direction of the apical section (12),
wherein a borehole (38) in the coronal portion (14), which extends along the second central axis (22) and has an internal thread, which is designed to allow a screw to engage for releasably fixing the display element (30) in a position on the abutment (10);
wherein the first indexing element (24a) is arranged in the truncated cone-shaped area (20) in a shell surface (26) of the coronal portion (14) for unambiguously predetermining an unambiguous orientation of the display element (30), which can be coupled to the coronal portion (14) for a digital scanning operation, based on an orientation of the first central axis (18), and wherein the first indexing element (24a) is designed as a protrusion, so that the shell surface (26) has an irregular course, and the first indexing element (24a) interacts with the display element (30) in such a way that the orientation of the apical section (12) is predetermined for the display element (30); and
wherein the display element (30) is designed to define a unique orientation of the display element (30) by means of an indexing coupling (34) corresponding to the indexing element (24, 24a, 24b) for defining and to display an unambiguous position and unambiguous orientation of the abutment for a digital scanning operation when coupled to the coronal section (14),
wherein the indexing coupling (34) interacts with the first corresponding indexing element (24, 24a, 24b) in such a way that the orientation of the apical section (12) of the abutment (10) is predetermined for the display element (30) by positive locking of the indexing element (24a) and the indexing coupling (34) when coupled to the coronal section (14) of the abutment (10),
wherein the display element (30) can be fixed to the abutment for a digital scanning operation by means of a screw which engages with the internal thread in the borehole (38) in the coronal section (14) of the abutment.

## Revendications

1. Pilier (10) destiné à maintenir une prothèse dentaire sur un implant de mâchoire, comprenant :
un tronçon apical (12) pour la fixation séparable du pilier (10) sur l'implant de mâchoire, qui est monté le long d'un premier axe central (18) ;
un tronçon coronal (14) pour la fixation séparable de la prothèse dentaire sur le pilier (10) qui est monté le long d'un second axe central (22), dans lequel le second axe central (22) est coudé par rapport au premier axe central (18) ;
un perçage (38) dans le tronçon coronal (14) qui passe le long du second axe central (22) et présente un filet femelle qui est conçu pour qu'une vis pour la fixation séparable d'un élément d'indication (30) puisse se mettre en prise sur le pilier (10) avec un perçage axial ou qu'une vis puisse se mettre en prise sur le pilier (10) pour la fixation séparable d'une prothèse dentaire ;
un premier élément d'indexage (24a) dans une surface d'enveloppe (26) du tronçon coronal (14) pour prédéfinir un alignement sans équivoque de l'élément d'indication (30) couplé au tronçon coronal (14) pour une opération de scannage numérique en se basant sur un alignement sans équivoque du premier axe central (18), dans lequel le premier élément d'indexage (24a) est conçu en tant qu'évidement, de telle façon que l'enveloppe (26) est irrégulière, et le premier élément d'indexage (24a) coopère avec l'élément d'indication (30) de telle façon que l'alignement du tronçon apical (12) par accouplement mécanique du premier élément d'indexage (24a) et d'un couplage d'indexage (34) de l'élément d'indication (30) soit indiqué à l'élément d'indication (30) ;
un second élément d'indexage (24b) qui est conçu en tant que second évidement dans le pourtour du tronçon coronal (14) ; et
dans lequel le tronçon coronal (14) comprend une partie tronconique (20) s'élargissant en direction du tronçon apical (12), dans laquelle les éléments d'indexage (24a, 24b) sont disposés ;
le tronçon coronal (14) est approprié et prévu pour que tant une prothèse dentaire puisse être fixée sur le tronçon coronal (14) que l'élément d'indication (30) puisse être couplé pour une opération de scannage ;
le premier élément d'indexage (24a) est conçu en tant que premier évidement dans le pourtour du tronçon coronal (14) ;
une surface de délimitation (40) du premier ou du premier et du second évidement est parallèle au second axe central (22) ; et
la surface de délimitation (40) comprend une structure ondulée qui est de préférence symétrique par rapport à un plan de symétrie du premier ou du premier et du second évidement, dans lequel la surface de délimitation est ondulée dans une direction qui est perpendiculaire et à distance du second axe central.

2. Pilier (10) selon la revendication 1, dans lequel le premier évidement et le second évidement pour prédéfinir sans équivoque l'alignement de l'élément d'indication (30) pouvant être couplé, présentent une grandeur différente, présentent une forme différente et/ou sont disposés dans un angle différent de 180° par rapport au second axe central (22).

3. Pilier (10) selon l'une des revendications précédentes, comprenant une surface de butée (42) perpendiculaire au second axe central (22) et passant autour du second axe central (22) pour poser la prothèse dentaire.

4. Pilier (10) selon la revendication 3, comprenant un épaulement (44) parallèle à la surface de butée (42) entre l'élément d'indexage (24, 24a, 24b) et la surface de butée.

5. Pilier (10) selon l'une des revendications précédentes, comprenant un premier perçage (36) passant le long du premier axe central (18) à travers le tronçon coronal (14) et le tronçon apical (12) pour recevoir un élément de fixation pour fixer le pilier sur l'implant de mâchoire, dans lequel
le premier perçage traverse la surface d'enveloppe (26) du tronçon coronal ; et
de préférence, un diamètre (D1) du premier perçage dans le tronçon apical (12) est plus petit qu'un diamètre (D2) du premier perçage dans le tronçon coronal.

6. Pilier (10) selon l'une des revendications 1 et 5, dans lequel
un segment de la surface d'enveloppe (26) du tronçon coronal (14) interrompu par le premier perçage (36) est plus petit qu'un segment de la surface d'enveloppe du tronçon coronal interrompu par le premier évidement.

7. Pilier (10) selon l'une des revendications précédentes, **caractérisé en ce que** le second perçage (38) avec filet femelle passant le long du second axe central (22) à travers le tronçon coronal (14) peut être utilisé pour visser la prothèse dentaire.

8. Élément d'indication (30) pour le couplage à un tronçon coronal (14) d'un pilier (10) selon l'une des revendications précédentes, comprenant :
un couplage d'indexage (34) correspondant au premier élément d'indexage (24a) du pilier (10) pour déterminer l'alignement sans équivoque de l'élément d'indication (30), dans lequel le couplage d'indexage (34) peut coopérer avec le premier élément d'indexage (24a) correspondant de telle façon que l'alignement du tronçon apical (12) du pilier (10) est prédéfini sans équivoque à l'élément d'indication (30) par accouplement mécanique du premier élément d'indexage (24a) et du couplage d'indexage (34) lors du couplage avec le tronçon coronal (14) du pilier (10) ;
le couplage d'indexage est conçu en tant que saillie correspondant à l'évidement dans le pourtour du tronçon coronal du pilier (10) dont la surface de délimitation (40) comprend la structure ondulée,
dans lequel l'élément d'indication (30) est équipé et prévu pour indiquer une position sans équivoque et un alignement sans équivoque du pilier coudé pour une opération de scannage numérique et
l'élément d'indication (30) est ainsi équipé et prévu pour être fixé sur le pilier (10) au moyen d'une vis.

9. Élément d'indication (30) selon la revendication 8, **caractérisé en ce que** l'élément d'indication présente une zone de couplage (32) dans laquelle le couplage d'indexage est disposé, lequel correspond à l'élément d'indexage du pilier.

10. Élément d'indication (30) selon la revendication 9, **caractérisé en ce que** l'élément d'indication (30) présente à l'extérieur de la zone de couplage (32) sur sa face extérieure cylindrique un méplat qui est aplati et forme une surface de scannage plane qui s'étend parallèlement à l'axe médian de l'élément d'indication (30) .

11. Élément d'indication (30) selon la revendication 10, **caractérisé en ce que** le méplat s'étend dans le sens axial sur la face extérieure de l'élément d'indication de telle sorte que son allongement atteint plus de la moitié de l'allongement longitudinal axial de l'élément d'indication.

12. Élément d'indication (30) selon l'une des revendications 8 à 11, **caractérisé en ce que** l'élément d'indication (30) présente un perçage axial qui est un perçage traversant pour fixer l'élément d'indication sur le pilier au moyen d'une vis.

13. Système de modèle dentaire (28), comprenant un pilier (10) pour maintenir une prothèse dentaire sur un implant de mâchoire selon l'une des revendications 1-7, et
un élément d'indication (30) pour le couplage sur un tronçon coronal (14) d'un pilier (10) selon la revendication 8, dans lequel
le pilier (10) a un tronçon apical (12) pour la fixation séparable du pilier (10) sur l'implant de mâchoire qui est monté le long d'un premier axe central (18), et un tronçon coronal (14) pour la fixation séparable de la prothèse dentaire et de l'élément d'indication (30) sur le pilier (10) qui est monté le long d'un second axe central (22), dans lequel le second axe central (22) est coudé par rapport au premier axe central (18) et le tronçon coronal (14) comprend une partie tronconique (20) s'élargissant en direction du tronçon apical (12),
dans lequel un perçage (38) dans le tronçon coronal (14) passe le long du second axe central (22) et présente un filet femelle qui est conçu pour qu'une vis pour la fixation séparable de l'élément d'indication (30) puisse se mettre en prise dans une position sur le pilier (10) ;
dans lequel le premier élément d'indexage (24a) est disposé dans la partie tronconique (20) dans une surface d'enveloppe (26) du tronçon coronal (14) pour définir sans équivoque un alignement sans équivoque de l'élément d'indication (30) couplé au tronçon coronal (14) pour une opération de scannage numérique en se basant sur un alignement du premier axe central (18) et dans lequel le premier élément d'indexage (24a) est conçu en tant que saillie, de telle façon que la surface d'enveloppe (16) est irrégulière, et le premier élément d'indexage (24a) coopère avec l'élément d'indication (30) de telle façon que l'alignement du tronçon apical (12) est prédéfini à l'élément d'indication (30) ; et
dans lequel l'élément d'indication (30) est conçu pour déterminer un alignement sans équivoque de l'élément d'indication (30) au moyen d'un couplage d'indexage (34) correspondant à l'élément d'indexage (24, 24a, 24b) et pour indiquer une position sans équivoque et un alignement sans équivoque du pilier pour une opération de scannage numérique lors du couplage sur le tronçon coronal (14),
dans lequel le couplage d'indexage (34) coopère avec le premier élément d'indexage (24, 24a, 24b) de telle façon que l'alignement du tronçon apical (12) du pilier (10) est indiqué à l'élément d'indication (30) par accouplement mécanique du premier élément d'indexage (24a) et du couplage d'indexage (34) lors du couplage avec le tronçon coronal (14) du pilier (10),
dans lequel l'élément d'indication (30) peut être fixé sur le pilier par une vis qui se met en prise dans le filet femelle dans le perçage (38) dans le tronçon coronal (14) pour une opération de scannage numérique.
